# EUROPÄISCHE PATENTSCHRIFT

(11) **EP 1 199 617 B1**
(45) Veröffentlichungstag und Bekanntmachung des Hinweises auf die Patenterteilung: **15.02.2006**
(21) Anmeldenummer: 01123941.5
(22) Anmeldetag: 08.10.2001
(51) Int. Cl.: G05B 13/02

(54) **Verfahren zur Herstellung eines Geräts**
Method for producing a device
Procédé de production d'un dispositif

(30) Priorität: 19.10.2000 DE 10052115
(43) Veröffentlichungstag der Anmeldung: 24.04.2002
(73) Patentinhaber: Alstom Technology Ltd, 5400 Baden (CH)
(72) Erfinder: Büche, Dirk, 79780 Stühlingen (DE); Dornberger, Rolf, Dr., 5405 Baden-Dättwil (CH)

(56) Entgegenhaltungen:
- WO-A-00/34850
- TAMURA I ET AL: "A meta-heuristic satisfying tradeoff method for solving multiobjective combinatorial optimization problems-with application to flowshop scheduling" SYSTEMS, MAN, AND CYBERNETICS, 1999. IEEE SMC '99 CONFERENCE PROCEEDINGS. 1999 IEEE INTERNATIONAL CONFERENCE ON TOKYO, JAPAN 12-15 OCT. 1999, PISCATAWAY, NJ, USA,IEEE, US, 12. Oktober 1999 (1999-10-12), Seiten 539-544, XP010363788 ISBN: 0-7803-5731-0
- FONSECA C M ET AL: "MULTIOBJECTIVE OPTIMIZATION AND MULTIPLE CONSTRAINT HANDLING WITH EVOLUTIONARY ALGORITHMS-PART I: A UNIFIED FORMULATION" IEEE TRANSACTIONS ON SYSTEMS, MAN AND CYBERNETICS. PART A: SYSTEMS AND HUMANS, IEEE SERVICE CENTER, US, Bd. 28, Nr. 1, Januar 1998 (1998-01), Seiten S26-S37, XP001148135 ISSN: 1083-4427

## Beschreibung

### Technisches Gebiet

Die Erfindung betrifft ein Verfahren zur Herstellung eines Geräts gemäss dem Oberbegriff des Anspruchs 1. Bei dem Gerät kann es sich um ein beliebiges technisches Gerät handeln, auch um eine grössere Anlage oder einen Anlagenteil, insbesondere um eine Turbinenanlage.

### Stand der Technik

Es ist bekannt, technische Geräte mit einer aus mehreren einstellbaren Variablen bestehenden Bestimmungsgrösse hinsichtlich einer bestimmten aus mehreren Eigenschaften sich zusammensetzenden Zielgrösse zu optimieren, d. h. die Bestimmungsgrösse derart zu wählen, dass die von ihnen abhängige Zielgrösse in einem festzulegenden Sinne optimal ist. Beispielsweise können bei einer Turbinenanlage mittlerer Durchmesser, Zahl und Sehnenlänge der Rotor- und Statorblätter der Turbine und andere Variable so ausgewählt werden, dass sie hinsichtlich Wirkungsgrad und Gestehungskosten optimal ist.

Wird hinsichtlich mehrerer.unabhängiger Eigenschaften optimiert, so ist es im allgemeinen nicht möglich, eine bestimmte optimale Lösung auszuwählen, doch kann eine Menge sogenannter Pareto-optimaler Lösungen aufgefunden werden, die jeweils dadurch gekennzeichnet sind, dass sie nicht Pareto-dominiert sind, d. h. dass es keine andere Lösung gibt, welche hinsichtlich einer Eigenschaft günstiger und hinsichtlich keiner der übrigen Eigenschaften ungünstiger wäre. Anders ausgedrückt, eine Lösung, die hinsichtlich mindestens einer Eigenschaft günstiger ist als eine Pareto-optimale Lösung, ist zwangsläufig hinsichtlich mindestens einer anderen Eigenschaft ungünstiger als diese.

Die Zielgrössen der Pareto-optimalen Lösungen bilden gewöhnlich einen Hyperflächenabschnitt im von den Zielgrössen aufgespannten Zielraum, die sogenannte Pareto-Front, welche die Zielmenge, d. h. die Menge der Zielgrössen sämtlicher möglichen Lösungen gegen Bereiche des Zielraums, die günstiger wären, aber nicht zugänglich sind, berandet. An die Pareto-Front schliessen weitere die Zielmenge berandende Hyperflächenabschnitte an, welche Lösungen enthalten, die zwar nicht Pareto-optimal, aber u. U. trotzdem von Interesse sind.

Für die Suche nach Pareto-optimalen Lösungen bieten sich semistochastische Verfahren an, welche sich z. B. am natürlichen Evolutionsprozess der Lebewesen durch Kreuzung, Mutation und Selektion orientieren und mittels sogenannter evolutionärer Algorithmen realisiert werden. Mit Hilfe derselben werden, ausgehend von bestimmten, z. B. zufallsverteilten Ausgangsgrössen für einen Satz von Bestimmungsgrössen iterativ Pareto-optimale Lösungen approximiert, indem bei jedem Iterationsschritt die Bestimmungsgrössen z. B. durch Rekombinationen und Zufallsmutationen variiert und aus den so hergestellten Versuchsgrössen durch auf die entsprechenden Zielgrössen gestützte Auswahl ein neuer Satz von Bestimmungsgrössen selektiert wird. Sobald ein bestimmtes Abbruchskriterium erfüllt ist, wird die Iteration abgebrochen. Anschliessend wird aus der Menge der ermittelten mindestens annähernd Pareto-optimalen Lösungen eine Lösung ausgewählt und umgesetzt, d. h. ein den Bestimmungsgrössen desselben entsprechendes technisches Gerät hergestellt.

Bei der Selektion der neuen Bestimmungsgrössen aus den erzeugten Versuchsgrössen sind im Rahmen bekannter gattungsgemässer Verfahren verschiedene Vorgehensweisen erprobt worden. So ist es etwa bekannt, jeder Versuchsgrösse aufgrund ihrer Position im Zielraum einen bestimmten Rang zuzuweisen, je nachdem, von wie vielen anderen Versuchsgrössen sie dominiert wird. Einer Versuchsgrösse, die von keiner anderen dominiert wird, wird der niedrigste Rang zugewiesen usw.. Bei der Selektion werden dann Versuchsgrössen von niedrigem Rang bevorzugt. Falls zwischen zwei Versuchsgrössen gleichen Ranges entschieden werden muss, wird diejenige selektiert, in deren Umgebung die Dichte der Versuchsgrössen geringer ist. S. dazu N. Srinivas, K. Deb: 'Multiobjective optimization using nondominated sorting in genetic algorithms', Evolutionary Computation 2 (1994).

Bei dieser Selektionsmethode und ähnlichen Methoden kann es jedoch leicht geschehen, dass sich die aufgefundenen Lösungen in einem bestimmten Teilbereich der Pareto-Front konzentrieren, während ausserhalb desselben viele Pareto-optimale Lösungen unentdeckt bleiben. Nach Lösungen ausserhalb der Pareto-Front wird überhaupt nicht gesucht. Dadurch ist die Auswahl der schliesslich umgesetzten Lösung von vornherein sehr eingeschränkt. Auch grössere praktisch interessante Variablenbereiche fallen u. U. völlig unter den Tisch.

### Darstellung der Erfindung

Der Erfindung liegt die Aufgabe zu Grunde, ein gattungsgemässes Verfahren anzugeben, bei welchem die Lösung, die schliesslich umgesetzt wird, aus einer über einen grossen Bereich verteilten Menge von Lösungen ausgewählt werden kann. Diese Aufgabe wird durch die Merkmale im Kennzeichen des Anspruchs 1 gelöst.

Beim erfindungsgemässen Verfahren kann leicht sichergestellt werden, dass die aufgefundenen Lösungen über einen vorgängig festlegbaren interessierenden Bereich der Zielmenge verteilt sind. Auch die Lösungsdichte als Funktion der Zielgrössen lässt sich steuern. Dass in grösseren Bereichen der Pareto-Front und anschliessender Teile der Zielmenge keine Lösungen aufgefunden werden, kann ausgeschlossen werden. Für die Auswahl der umzusetzenden Lösung steht eine grosse Anzahl von hinsichtlich ihrer Eigenschaften über einen weiten Bereich verteilten Lösungen zur Verfügung.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: die Bestimmungsmenge eines typischen Optimierungsproblems und ihre Abbildung auf die entsprechende Zielmenge,
- Fig. 2a,b: Schritte bei der Auswahl neuer Bestimmungsgrössen aus vorher erzeugten Versuchsgrössen im Zielraum,
- Fig. 3: einen meridionalen Schnitt durch eine Dampfturbine, und
- Fig. 4: einen radialen Schnitt durch eine Mittelstufe der Dampfturbine von Fig. 3 mit Querschnitten einer Statorschaufel und einer Rotorschaufel.

### Wege zur Ausführung der Erfindung

Bei der Herstellung technischer Geräte aller Art, von elektronischen Apparaten bis zu grossen Anlagen oder Anlagenteilen liegt oft der grundsätzliche Aufbau fest, doch gibt es eine Reihe von meist durch reelle Zahlen darstellbaren Variablen, welche Dimensionierungen, Kennzahlen und dergleichen bezeichnen und welche zur genauen Bestimmung des herzustellenden Gerätes festgelegt werden müssen. Diese Variablen können zu einem Vektor zusammengefasst werden, dessen Komponenten sie bilden und der im folgenden als Bestimmungsgrösse bezeichnet wird. Er kann über eine Bestimmungsmenge variieren, die eine Teilmenge eines n-dimensionalen Bestimmungsraumes ist, wobei n>1 die Zahl der Variablen ist. Die Bestimmungsmenge kann durch Zwangsbedingungen an die Variablen, die erfüllt sein müssen, eingeschränkt sein. So können etwa alle Variablen grösser als Null und nach oben beschränkt sein. Es sind jedoch auch komplexere Zwangsbedingungen möglich.

Aus der Bestimmungsgrösse ergeben sich über bekannte funktionale Zusammenhänge Eigenschaften des Geräts, die in der Regel wiederum durch reelle Zahlen darstellbar sind. Sie bilden die Komponenten einer Zielgrösse, eines Vektors, der in einer Zielmenge liegt. Die Zielmenge ist eine Teilmenge eines m-dimensionalen Zielraums und kann ebenfalls durch weitere Zwangsbedingungen - z. B. Mindestanforderungen hinsichtlich bestimmter Eigenschaften - eingeschränkt sein. Im folgenden sind nur Fälle von Interesse, bei denen die Dimension des Zielraums, entsprechend der Zahl der Eigenschaften, m>1 ist.

Die Eigenschaften des Geräts sollen nun möglichst günstig, in der Regel möglichst gross oder möglichst klein sein. Im folgenden wird davon ausgegangen, dass sie alle möglichst klein sein sollen, was sich durch geeignete Definitionen immer erreichen lässt. Zur Auffindung einer möglichst günstigen Bestimmungsgrösse, d. h. einer möglichst günstigen Kombination von Variablen wird nun hinsichtlich der Eigenschaften optimiert. Dabei ergibt sich, da die m>1 Eigenschaften unabhängig sind, keine eindeutige Lösung, sondern eine Lösungsmenge, die eine Auswahl z. B. zur Anpassung an spezifische Bedingungen gestattet. Als Grundlage für die Auswahl der umzusetzenden Lösung sind vor allem Pareto-optimale Lösungen von Interesse, da sie keine Verbesserung hinsichtlich einer Eigenschaft zulassen, ohne dass hinsichtlich mindestens einer anderen Eigenschaft eine Verschlechterung in Kauf genommen werden müsste.

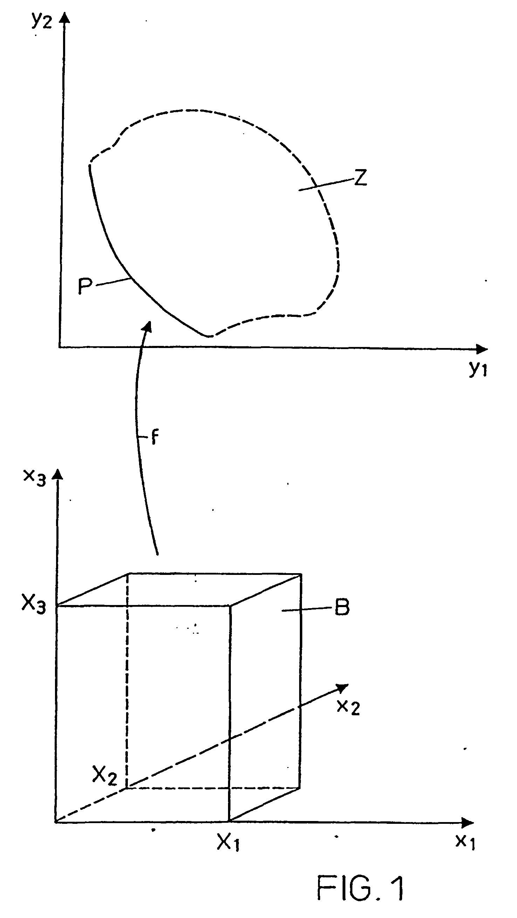

In Fig. 1 ist eine Situation dargestellt, in der der Bestimmungsraum 3-dimensional ist mit Parametern x₁, x₂ und x₃. Die Bestimmungsmenge B, über welche die Bestimmungsgrösse variiert, ist dadurch eingeschränkt, dass die variablen jeweils zwischen Null und einer Obergrenze X₁, X₂ bzw. X₃ liegen und bildet daher einen Quader, das Produkt der Intervalle [0, X₁], [0, X₂] und [0, X₃]. Durch einen bekannten funktionalen Zusammenhang f wird jeder Bestimmungsgrösse x= (x₁, x₂, x₃) eine Zielgrösse y=f(x) zugeordnet, die in einer Zielmenge Z liegt. Sie ist eine Teilmenge des in diesem Fall 2-dimensionalen Zielraums, d. h. y=(y₁,y₂), wobei y₁ und y₂ zwei Eigenschaften darstellen, die optimiert werden sollen. Die Zielmenge Z kann die vollständige Bildmenge der Bestimmungsmenge B unter der Abbildung f oder ein durch Zwangsbedingungen eingeschränkter Teil derselben sein.

Die Zielgrössen der gesuchten Lösungen bilden eine sogenannte Pareto-Front P (durchgezogene Linie), welche die Zielmenge Z gegen kleine, d. h. günstige Werte der Eigenschaften y₁, y₂ hin berandet. Seitlich schliessen an die Pareto-Front P Lösungen an, welche ebenfalls auf dem Rand der Zielmenge Z liegen. Sie sind nicht Pareto-optimal, da zu jeder dieser Lösungen eine Lösung auf der Pareto-Front gefunden werden kann, bei der beide Eigenschaften günstiger sind, doch können sie u. U. ebenfalls von Interesse sein.

Es geht nun in erster Linie darum, Bestimmungsgrössen x zu finden, bei welchen die zugehörigen Zielgrössen y=f(x) möglichst nahe an der Pareto-Front P liegen. Sie sollen ausserdem einigermassen gleichmässig über die gesamte Pareto-Front P und möglichst auch über die an dieselbe anschliessenden Randbereiche der Zielmenge Z verteilt sein. Derartige Lösungen werden mittels eines iterativen evolutionären Algorithmus erzeugt, welcher die Grundlage eines Programms bildet, das auf einer Datenverarbeitungsanlage abläuft. Dabei ist in der Regel jede Variable durch einen Bitvektor einer Länge L, die z. B. 32 beträgt, codiert.

Zur Auffindung annähernd Pareto-optimaler Lösungen werden zuerst in der Bestimmungsmenge B liegende Ausgangsgrössen erzeugt, die als erster Satz von Bestimmungsgrössen den Ausgangspunkt der Iteration bilden. Sie können z. B. regelmässig oder zufällig über die Bestimmungsmenge B verteilt sein. Dann werden so viele Iterationschritte ausgeführt, bis ein Abbruchkriterium erfüllt ist. Es kann darin bestehen, dass eine bestimmte Höchstzahl von Iterationsschritten ausgeführt oder eine bestimmte Rechenzeit verbraucht wurde oder auch darin, dass die Aenderung der Zielgrössen während einer bestimmten Anzahl von Iterationsschritten unterhalb eines bestimmten Minimums geblieben ist.

Bei jedem Iterationschritt werden folgende Teilschritte ausgeführt:
Rekombination: Es werden jeweils durch Kombination von Teilen mehrerer Bestimmungsgrössen aus dem vorliegenden Satz neue Grössen erzeugt. Beispielsweise werden zuerst entweder sämtliche möglichen geordneten Paare von Bestimmungsgrössen gebildet oder auch nur einige mittels eines Zufallsgenerators bestimmte. Jede Bestimmungsgrösse bildet, da sie aus den n als Bitvektoren kodierten Variablen mit jeweils einer Stellenzahl L besteht, eine Reihe von Ziffern 0 oder 1 der Länge nL. Es wird nun ebenfalls mittels eines Zufallsgenerators eine Zahl 1 mit 0≤1≤nL erzeugt und dann zwei neue Grössen gebildet, indem die ersten 1 Ziffern von der ersten Bestimmungsgrösse und die übrigen von der zweiten Bestimmungsgrösse genommen werden und umgekehrt.
Mutation: Die im Rekombinationsschritt erzeugten Grössen werden mittels eines Zufallsgenerators abgewandelt. Eine sehr einfache Abwandlung besteht darin, dass jede Ziffer der obengenannten Reihe mit einer bestimmten Wahrscheinlichkeit invertiert, d. h. 0 in 1 oder 1 in 0 umgewandelt wird. Je nach der Lage eines invertierten Bit tritt dadurch eine kleinere oder grössere Aenderung ein. Natürlich können aus einer Grösse auch mehrere Ausgangsgrössen auf solche Weise erzeugt werden.
Selektion: Aus den beiden obengenannten Schritten geht eine Menge von Versuchsgrössen hervor, die in der Regel grösser als der ursprüngliche Satz von Bestimmungsgrössen ist. Aus dieser meist verhältnismässig grossen Menge von Versuchsgrössen wird nun ein neuer Satz von im Durchschnitt besonders günstigen Bestimmungsgrössen ausgewählt. Die Vorgehensweise bei der Selektion ist für die Entwicklung der Iteration von grosser Bedeutung. Zur Steuerung der Annäherung an die Pareto-Front P und an angrenzende Bereiche des Randes der Zielmenge Z, insbesondere zur Erzielung einer breiten Annäherung, wird wie folgt vorgegangen:

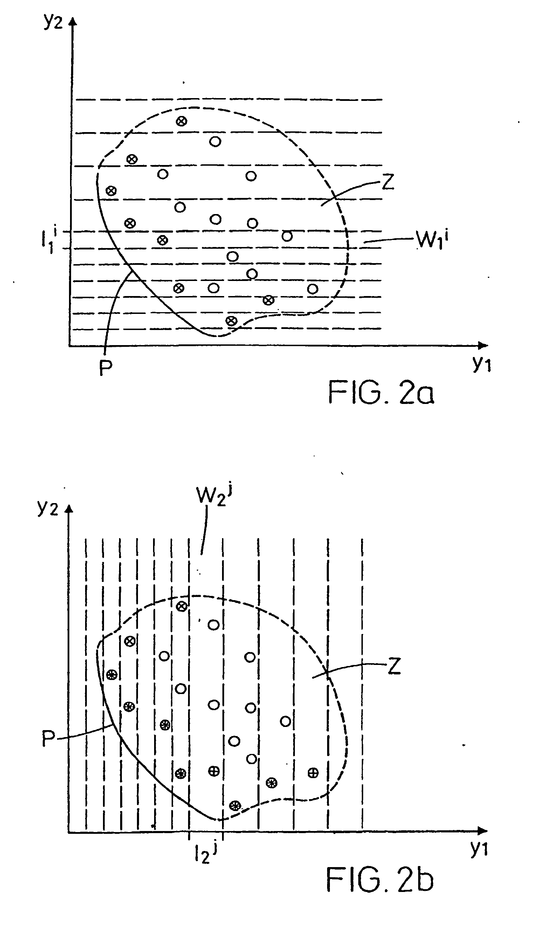

In einem ersten Selektionsschritt wird die durch die Bedingung y₁=0 gekennzeichnete Hyperebene eines Teils des Zielraums, der die Zielmenge Z umfasst und die im dargestellten 2-dimensionalen Fall (Fig. 2a) mit der y₂₋Achse zusammenfällt, einer Partition in Untermengen unterworfen, die in diesem Fall Intervalle I₁ⁱ bilden. Ausgehend davon wird der besagte Teil des Zielraums in Teilmengen W₁ⁱ unterteilt, welche die Urbilder der Orthogonalprojektionen desselben längs der positiven y₁₋Achse auf die besagten Intervalle I₁ⁱ sind. Anders ausgedrückt, die Teilmenge W₁ⁱ für ein bestimmtes i ist die Menge aller Punkte y=(y₁,y₂) im besagten Teil des Zielraums, für die y₁>0 ist und y₂ in I₁ⁱ liegt. In Fig. 2a bildet sie einen zur Koordinatenachse y₁ parallelen Streifen.

Zu jeder der nichtüberlappenden Teilmengen W₁ⁱ wird nun diejenige Versuchsgrösse ermittelt und selektiert, für die y₁ optimal, d. h. minimal ist. In Fig. 2a sind die Zielgrössen sämtlicher Versuchsgrössen mit einem Kreis o markiert, die der in den einzelnen W₁ⁱ selektierten Versuchsgrössen sind mit einem überlagerten Malzeichen x gekennzeichnet.

In einem zweiten Selektionsschritt wird der die Zielmenge Z enthaltende Teil des Zielraums auf ganz analoge Weise in Teilmengen W₂^{j} unterteilt und auch dort wieder zu jeder Teilmenge diejenige Versuchsgrösse ermittelt und selektiert, für die y₂ optimal, d. h. minimal ist. Diese Lösungen sind in Fig. 2b mit einem überlagerten Pluszeichen + gekennzeichnet. Der neue Satz von Bestimmungsgrössen, mit denen dann der nächste Iterationsschritt in Angriff genommen wird, setzt sich aus den in beiden Selektionsschritten selektierten Versuchsgrössen zusammen.

In verhältnismässig vielen Fällen, vor allem in der Nähe des mittleren Bereichs der Pareto-Front P sind es die gleichen Versuchsgrössen, die in beiden Fällen ermittelt werden, so dass ein Selektionsschritt gewöhnlich ausreicht, um diese Versuchsgrössen festzustellen. In den seitlichen Randbereichen und vor allem im an die Pareto-Front P anschliessenden Teil des Randes der Zielmenge Z ist dies jedoch in der Regel nicht der Fall. Legt man auch auf die Ermittlung von Lösungen in diesen Bereichen Wert, so ist es erforderlich, beide Selektionsschritte durchzuführen.

Es besteht natürlich auch die Möglichkeit, in jeder der Teilmengen jeweils nicht nur eine Versuchsgrösse, sonder B. die k hinsichtlich der verbleibenden Komponente günstigsten mit k>1.

Die geschilderte Vorgehensweise bei der Selektion kann leicht auf Fälle übertragen werden, in denen die Dimension m des Zielraumes grösser als 2 ist. In diesem Fall wird man vorzugsweise sämtliche m Hyperebenen bilden, die dadurch gekennzeichnet sind, dass eine der Koordinaten y₁,...,yₘ gleich Null ist und jeweils eine Partition derselben in Untermengen durchführen. Dies kann so geschehen, dass von vornherein jede der Koordinatenachsen in Intervalle unterteilt und als Untermengen einer Hyperebene dann jeweils sämtliche Produkte von Intervallen herangezogen werden, in welche die die Hyperebene aufspannenden Koordinatenachsen unterteilt sind.

In jeder der Teilmengen, die von den Urbildern der Orthogonalprojektionen auf die Untermengen der Hyperebenen gebildet werden, wird dann die bezüglich der verbleibenden Komponente günstigste Versuchsgrösse selektiert und schliesslich zur Herstellung des neuen Satzes von Bestimmungsgrössen die Vereinigung der selektierten Versuchsgrössen über die Teilmengen und Hyperebenen gebildet. Je nach dem, ob man an einer möglichst umfassenden Ermittlung von Lösungen interessiert ist oder vor allem in bestimmten Bereichen liegende feststellen möchte, kann die Selektion auch nur einen Teil der Hyperebenen berücksichtigen, zumal, wie oben am Beispiel erläutert, die zentralen Bereiche der Pareto-Front meist schon beim ersten Selektionsschritt ziemlich gut erfasst werden.

Die konkrete durch den Algorithmus bestimmte Vorgehensweise kann natürlich durch andere Zusammenfassung von Einzelschritten etc. vom oben Geschilderten abweichen, insbesondere brauchen nicht unbedingt die beschriebenen Selektionsschritte nacheinander ausgeführt zu werden. Lediglich das Resultat der Selektion muss dem entsprechen, das sich aus dem oben erläuterten Vorgehen ergibt.

Die Unterteilung in Intervalle kann jeweils gleichmässig oder logarithmisch abgestuft sein, sie kann aber auch etwa in Bereichen, an denen besonderes Interesse besteht, feiner sein. Die Partitionen in Untermengen können während der gesamten Iteration festgehalten oder verändert, z. B. an die Verteilung der zielgrössen angepasst werden. Statt oder neben Hyperebenen können auch Teilräume niedrigerer Dimension herangezogen werden, doch muss dann in jeder Teilmenge bezüglich mehrerer Eigenschaften optimiert werden, was weitere Vorgaben oder ein rekursives Vorgehen erfordert.

So sind bei der Selektion verschiedenste Abwandlungen des geschilderten Vorgehens denkbar. Entscheidend ist, dass durch Vorgaben hinsichtlich der Lage der Zielgrössen die Ermittlung der Lösungen jeweils so gesteuert wird, dass sich die aus denselben abgeleiteten Zielgrössen schliesslich auf eine gewünschte Weise über einen Randbereich der Zielmenge verteilen. Selbstverständlich sind auch bei der Rekombination und der Mutation verschiedene Abwandlungen möglich. Diese Teilschritte sind auch nicht in jedem Fall beide erforderlich.

Aus den ermittelten Lösungen wird nun eine bestimmte Lösung ausgewählt, wobei weitere, eventuell eher intuitive Kriterien in die Entscheidung miteinbezogen werden können. Die Bestimmungsgrösse der ausgewählten Lösung wird dann der Herstellung des Geräts zugrundegelegt. Es wird also ein Gerät hergestellt, bei dem die Variablen so festgelegt wurden, dass sie der Bestimmungsgrösse der ausgewählten Lösung entsprechen.

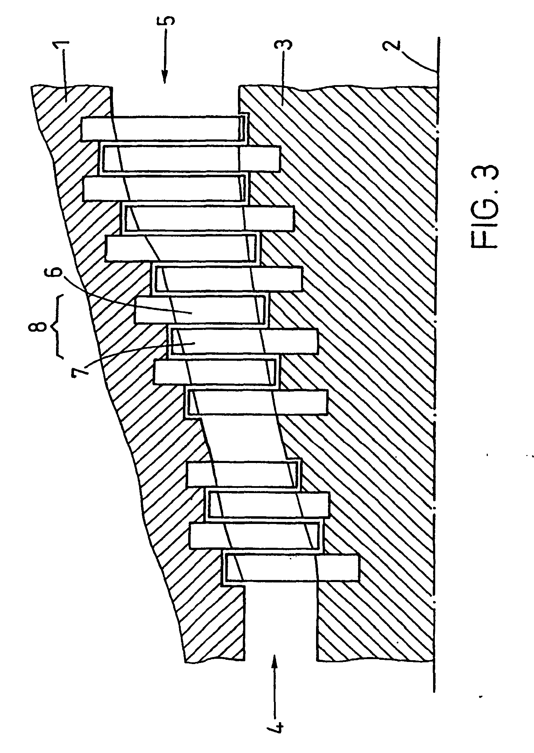

Als Beispiel wird im folgenden die Herstellung einer Dampfturbine für ein Kraftwerk näher erläutert. Sie umfasst (Fig. 3) eine Statoranordnung 1 und eine um eine Achse 2 drehende Rotoranordnung 3. Vom Turbineneintritt 4 bis zum Turbinenauslass 5 folgen eine Reihe von Stufen zunehmenden Durchmessers aufeinander, in denen sich jeweils über den Umfang verteilte Kränze von Statorschaufeln 6 und Rotorschaufeln 7 abwechseln. Eine mittlere Stufe 8 wird als Grundlage für die Auslegung herangezogen. Die an dieser Stufe gewonnenen Resultate werden dann auf die übrigen Stufen extrapoliert. Dank dieser Vorgehensweise ist die Zahl der Variablen verhältnismässig gering.

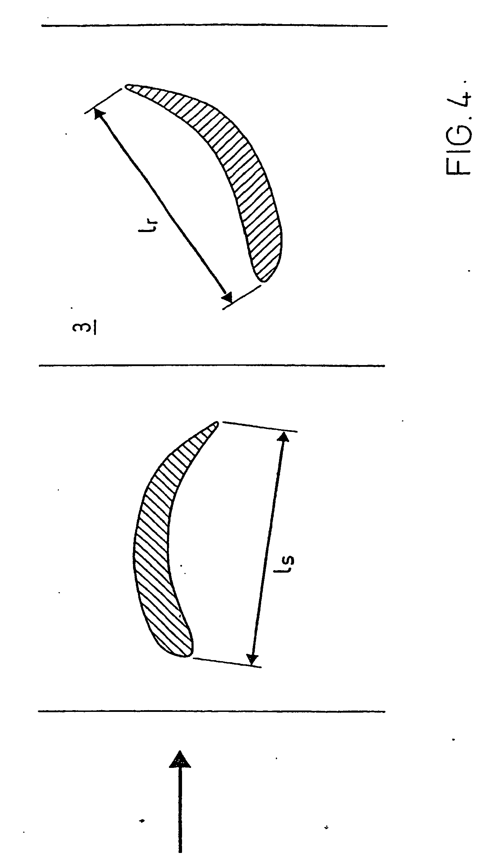

Die Auslegung der mittleren Stufe 8 wird durch fest vorgegebene Parameter wie Fluideigenschaften, Eintrittsdruck, Eintrittstemperatur, Eintrittsmassenstrom, Auslassdruck, Drehzahl u. a. sowie durch innerhalb gewisser Grenzen frei festlegbare Variable bestimmt, welche unmittelbar Konstruktionsparameter bezeichnen wie der mittlere Durchmesser, die Sehnenlänge lₛ der Statorschaufel 6 (Fig. 4) und die Sehnenlänge lᵣ der Rotorschaufel 7 oder Ausgangsgrössen, aus den sich Konstruktionsparameter berechnen lassen. Zu den letzteren gehören Lastparameter, Strömungsparameter und Reaktionsgrad, aus denen über thermodynamische Gleichungen Konstruktionsparameter wie Umlenkwinkel und Zahl der Stufen, Zahl der Schaufeln - welche vor allem vom Lastparameter abhängen - sowie Stufenquerschnitte u. a. ermittelt werden können.

Die Variablen bilden die Komponenten einer Bestimmungsgrösse x, aus der sich zusammen mit den fest vorgegebenen Parametern wiederum über bekannte thermodynamische Zusammenhänge und Verlustkorrelationen (s. z. B. W. Traupel: 'Thermische Turbomaschinen', Bd. I, 3. Auflage, Springer Verlag 1981) die Verluste und aus den bekannten Einzelkosten für Komponenten wie Schaufeln etc. die Gestehungskosten als zu minimierende Eigenschaften berechnen lassen, welche zur Zielgrösse y=f(x) zusammengefasst werden. Grundsätzlich entspricht dies dem in Fig. 1 Dargestellten, doch ist die Dimension n des Bestimmungsraums grösser als 3 und die Variablen sind in der Regel auf andere Weise eingeschränkt. Bei der Ermittlung der Pareto-optimalen und eventuell weiterer Lösungen wird wie weiter oben geschildert vorgegangen. Aus diesen Lösungen wird dann je nach den vorhandenen Präferenzen eine Lösung ausgewählt, die vor allem durch einen hohen Wirkungsgrad und entsprechend tiefe Brennstoffkosten ausgezeichnet ist oder eine, bei der vor allem die Gestehungskosten niedrig sind oder auch eine Lösung, die einen günstigen Kompromiss zwischen tiefen Gestehungskosten und geringen Verlusten darstellt. Da in der Regel die gesamte Pareto-Front und auch an diese anschliessende Randbereiche der Zielmenge bekannt sind, können Teilbereiche mit besonders günstigen Kombinationen der besagten Eigenschaften verhältnismässig leicht identifiziert werden.

Aus den Werten für die Variablen, die sich aus der ausgewählten Lösung ergeben, werden dann, soweit es sich nicht bereits um konkrete Konstruktionsparameter handelt, die Werte der unmittelbaren Konstruktionsparameter berechnet. Die Dampfturbine wird dann so gebaut, dass alle ihre Konstruktionsparameter den sich aus den Variablen ergebenden Werten entsprechen.

Das beschriebene Verfahren eignet sich auch insbesondere für die Herstellung anderer Komponenten von Turbinenanlagen, z. B. Turbomaschinen wie Turbinen aller Art, Kompressoren, Turbolader und Ventilatoren.

### Bezugszeichenliste

- 1: Statoranordnung
- 2: Achse
- 3: Rotoranordnung
- 4: Turbineneintritt
- 5: Turbinenauslass
- 6: Statorschaufel
- 7: Rotorschaufel
- 8: mittlere Stufe

## Patentansprüche

1. Verfahren zur Herstellung eines Geräts, dessen Ausbildung durch eine Bestimmungsgrösse (x), einen Vektor aus einer Bestimmungsmenge, welche eine Teilmenge eines n-dimensionalen Raumes mit n>1 ist, festgelegt ist, von welcher eine Zielgrösse (y), ein Vektor aus einer Zielmenge (Z), welche eine Teilmenge eines m-dimensionalen Raumes mit m>1 ist, abhängt, derart, dass approximativ Pareto-Lösungen ermittelt werden, welche sich **dadurch** auszeichnen, dass bei jeder Lösung, bei welcher eine Komponente der Zielgrösse (y) einen günstigeren Wert aufweist, zwangsläufig mindestens eine andere Komponente einen ungünstigeren Wert aufweist, indem als Satz von Bestimmungsgrössen dienende Ausgangsgrössen bestimmt und bis zur Erfüllung eines Abbruchkriteriums Iterationsschritte durchgeführt werden, bei welchen jeweils aus dem Satz von Bestimmungsgrössen ein neuer Satz von Bestimmungsgrössen ermittelt wird, indem
- aus dem Satz von Bestimmungsgrössen eine Menge von jeweils in der Bestimmungsmenge liegenden Versuchsgrössen erzeugt wird, aus der jeweils aufgrund der aus denselben berechneten Zielgrössen der neue Satz von Bestimmungsgrössen selektiert wird,
- nach Abbruch der Iteration eine Bestimmungsgrösse aus dem Satz von Bestimmungsgrössen ausgewählt und
- ein gemäss der ausgewählten Bestimmungsgrösse ausgebildetes Gerät hergestellt wird,
**dadurch gekennzeichnet, dass** die Selektion des neuen Satzes von Bestimmungsgrössen aus den Versuchsgrössen jeweils erfolgt, indem
- in der Zielmenge (Z) Teilmengen (W₁ⁱ, W₂^{j}) gebildet werden, welche sich als Schnitte derselben mit Urbildern von Orthogonalprojektionen auf mehrere Untermengen mindestens eines Teilraums ergeben, welcher durch Nullsetzen mindestens einer Komponente der Zielgrösse (y) bestimmt ist und
- zu jeder der Teilmengen (W₁ⁱ, W₂^{j}) aus den in derselben liegenden Versuchsgrössen eine Auswahlmenge von Bestimmungsgrössen selektiert wird.

2. Verfahren nach Anspruch 1, **dadurch gekennzeichnet, dass** die Auswahlmenge von Bestimmungsgrössen jeweils so bestimmt wird, dass sie hinsichtlich der zum Teilraum orthogonalen Komponenten der Zielgrösse optimal ist.

3. Verfahren nach Anspruch 2, **dadurch gekennzeichnet, dass** die Auswahlmenge von Bestimmungsgrössen jeweils aus genau einer Bestimmungsgrösse besteht.

4. Verfahren nach einem der Ansprüche 1 bis 3, **dadurch gekennzeichnet, dass** die Untermengen jeweils eine Partition mindestens eines Teils des jeweiligen Teilraums bilden.

5. Verfahren nach einem der Ansprüche 1 bis 4, **dadurch gekennzeichnet, dass** als Teilräume sämtliche Hyperebenen herangezogen werden, die jeweils durch Nullsetzen genau einer Komponente der Zielgrösse bestimmt sind.

6. Verfahren nach einem der Ansprüche 1 bis 5, **dadurch gekennzeichnet, dass** die Untermengen jeweils hergestellt werden, indem von den den entsprechenden Teilraum aufspannenden Komponenten jeweils Intervalle abgeteilt und deren Produkte gebildet werden.

7. Verfahren nach einem der Ansprüche 1 bis 6, **dadurch gekennzeichnet, dass** die Teilmengen jeweils vor der Ausführung der Iterationsschritte festgelegt und dann beibehalten werden.

8. Verfahren nach einem der Ansprüche 1 bis 7, **dadurch gekennzeichnet, dass** die versuchsgrössen jeweils unter Rekombination von Teilen mehrerer Bestimmungsgrössen oder von solchen abgeleiteter Grössen hergestellt werden.

9. Verfahren nach einem der Ansprüche 1 bis 8, **dadurch gekennzeichnet, dass** die Versuchsgrössen jeweils unter Zufallsmutation einer Bestimmungsgrösse oder einer von solchen abgeleiteten Grösse hergestellt werden.

10. Verfahren nach einem der Ansprüche 1 bis 9, **dadurch gekennzeichnet, dass** es sich bei dem Gerät um eine Turbinenanlage oder um einen Teil einer solchen, insbesondere eine Turbomaschine wie eine Turbine, einen Kompressor, einen Turbolader oder einen Ventilator handelt und verschiedene Konstruktionsparameter derselben oder Ausgangsgrössen für die Berechnung von Konstruktionsparametern als Komponenten der Bestimmungsgrösse auftreten.

11. Verfahren nach Anspruch 10, **dadurch gekennzeichnet, dass** Verluste und Gestehungskosten Komponenten der Zielgrösse bilden.

## Claims

1. Method for producing a device whose design is fixed by a defining parameter (x), a vector from a defining set which is a subset of an n-dimensional space where n>1, on which defining parameter a target parameter (y), a vector from a target set (Z) which is a subset of an m-dimensional space where m>1, is a function in such a way that approximate Pareto solutions are determined which are distinguished in that for each solution in which a component of the target parameter (y) has a more favourable value, at least one other component necessarily has a more unfavourable value, this being done by determining initial parameters serving as set of defining parameters and carrying out, up to the fulfilment of a truncation criterion, iteration steps in the case of which a new set of defining parameters is determined in each case from the set of defining parameters by virtue of the fact that
- a set of trial parameters respectively lying in the defining set is produced from the set of defining parameters and the new set of defining parameters is selected therefrom in each case on the basis of the target parameters calculated from said trial parameters,
- after truncation of the iteration a defining parameter is selected from the set of defining parameters, and
- a device designed in accordance with the selected defining parameter is produced,
**characterized in that** the selection of the new set of defining parameters from the trial parameters is performed in each case
- by forming in the target set (Z) subsets (W₁ⁱ, W₂^{j}) which are yielded as sections thereof with original images of orthogonal projections onto a number of subsets of at least one subspace which is determined by setting at least one component of the target parameter (y) to zero, and
- by selecting a selection set of defining parameters in relation to each of the subsets (W₁ⁱ, W₂^{j}) from the trial parameters lying in the same.

2. Method according to Claim 1, **characterized in that** the selection set of defining parameters is determined in each case such that it is optimal with reference to the components of the target parameter which are orthogonal to the subspace.

3. Method according to Claim 2, **characterized in that** the selection set of defining parameters consists in each case of precisely one defining parameter.

4. Method according to one of Claims 1 to 3, **characterized in that** the subsets in each case form a partition of at least one part of the respective subspace.

5. Method according to one of Claims 1 to 4, **characterized in that** use is made as subspaces of all hyperplanes which are determined in each case by setting precisely one component of the target parameter to zero.

6. Method according to one of Claims 1 to 5, **characterized in that** the subsets are produced in each case by respectively splitting intervals off from the components defining the corresponding subspace, and forming their products.

7. Method according to one of Claims 1 to 6, **characterized in that** the subsets are respectively fixed before the execution of the iteration steps and are then retained.

8. Method according to one of Claims 1 to 7, **characterized in that** the trial parameters are respectively produced by recombining parts of a number of defining parameters, or parameters derived from such.

9. Method according to one of Claims 1 to 8, **characterized in that** the trial parameters are respectively produced by randomly mutating a defining parameter, or a parameter derived from such.

10. Method according to one of Claims 1 to 9, **characterized in that** the device is a turbine plant or a part of such, in particular a turbomachine such as a turbine, a compressor, a turbocharger or a ventilator, and various design parameters of the same, or initial parameters for calculating design parameters occur as components of the defining parameter.

11. Method according to Claim 10, **characterized in that** losses and production costs form components of the target parameter.

## Revendications

1. Procédé pour fabriquer un appareil dont la configuration est fixée par une grandeur fondamentale (x), un vecteur d'une quantité de détermination qui est une quantité partielle d'un espace à n dimensions avec n > 1, de laquelle dépend une grandeur cible (y), un vecteur d'une quantité cible (Z) qui est une quantité partielle d'un espace à m dimensions avec m > 1, de telle sorte que des solutions de Pareto approximatives sont déterminées, lesquelles se caractérisent en ce qu'à chaque solution avec laquelle une composante de la grandeur cible (y) présente une valeur favorable, au moins une autre composante présente obligatoirement une valeur défavorable en déterminant des grandeurs initiales faisant office de jeu de grandeurs fondamentales et en exécutant des étapes d'itération jusqu'à ce qu'un critère d'interruption soit satisfait, lors desquelles un nouveau jeu de grandeurs fondamentales est à chaque fois déterminé à partir du jeu de grandeurs fondamentales
- en générant, à partir du jeu de grandeurs fondamentales, un certain nombre de grandeurs d'essai qui se trouvent à chaque fois dans la quantité de détermination à partir desquelles est à chaque fois sélectionné le nouveau jeu de grandeurs fondamentales en se basant sur les grandeurs cibles calculées de celles-ci,
- en sélectionnant, après l'interruption de l'itération, une grandeur fondamentale à partir du jeu de grandeurs fondamentales et
- en fabriquant un appareil configuré conformément à la grandeur fondamentale sélectionnée,
**caractérisé en ce que** la sélection du nouveau jeu de grandeurs fondamentales à partir des grandeurs d'essai s'effectue à chaque fois
- en formant dans la quantité cible (Z) des quantités partielles (W₁ⁱ, W₂^{j}) qui, en tant que coupes de celles-ci, sont obtenues avec les antécédents des projections orthogonales sur plusieurs sous-quantités d'au moins un espace partiel, lequel est déterminé en mettant à zéro au moins une composante de la grandeur cible (y) et
- en sélectionnant pour chacune des quantités partielles (W₁ⁱ, W₂^{j}) une quantité de sélection de grandeurs fondamentales à partir des grandeurs d'essai qui se trouvent dans celle-ci.

2. Procédé selon la revendication 1, **caractérisé en ce que** la quantité de sélection des grandeurs fondamentales est à chaque fois déterminée de sorte qu'elle soit optimale du point de vue des composantes de la grandeur cible qui sont orthogonales à l'espace partiel.

3. Procédé selon la revendication 2, **caractérisé en ce que** la quantité de sélection des grandeurs fondamentales se compose à chaque fois de précisément une grandeur fondamentale.

4. Procédé selon l'une des revendications 1 à 3, **caractérisé en ce que** les sous-quantités forment à chaque fois une partition d'au moins une partie de l'espace partiel correspondant.

5. Procédé selon l'une des revendications 1 à 4, **caractérisé en ce que** les espaces partiels utilisés sont tous les hyperplans qui sont à chaque fois définis en mettant à zéro exactement une composante de la grandeur cible.

6. Procédé selon l'une des revendications 1 à 5, **caractérisé en ce que** les sous-quantités sont à chaque fois réalisées en séparant à chaque fois des intervalles des composantes formant l'espace partiel correspondant et en calculant leur produit.

7. Procédé selon l'une des revendications 1 à 6, **caractérisé en ce que** les quantités partielles sont à chaque fois fixées avant l'exécution des étapes d'itération et sont ensuite conservées.

8. Procédé selon l'une des revendications 1 à 7, **caractérisé en ce que** les grandeurs d'essai sont à chaque fois réalisées en recombinant des parties de plusieurs grandeurs fondamentales ou des grandeurs dérivées de celles-ci.

9. Procédé selon l'une des revendications 1 à 8, **caractérisé en ce que** les grandeurs d'essai sont à chaque fois réalisées par une mutation aléatoire d'une grandeur fondamentale ou d'une grandeur dérivée de celle-ci.

10. Procédé selon l'une des revendications 1 à 9, **caractérisé en ce que** l'appareil est un équipement à turbine ou une partie d'un tel équipement, notamment une turbomachine telle qu'une turbine, un compresseur, un turbocompresseur ou un ventilateur et différents paramètres de construction de celui-ci ou grandeurs initiales apparaissent comme composantes de la grandeur fondamentale pour le calcul des paramètres de construction.

11. Procédé selon la revendication 10, **caractérisé en ce que** les pertes et les frais de fabrication sont des composantes de la grandeur cible.
